**Europäisches Patentamt**

**European Patent Office**

**Office européen des brevets**

(11) Veröffentlichungsnummer: **0 193 834**
**B1**

# (12) EUROPÄISCHE PATENTSCHRIFT

(45) Veröffentlichungstag der Patentschrift:
10.01.90

(51) Int. Cl.⁴: **H02G 15/04, H02G 15/18**

(21) Anmeldenummer: 86102387.7

(22) Anmeldetag: 24.02.86

(54) **Abschlussformstück aus schrumpfbarem Material für Gehäuse, insbesondere für Kabelgarnituren und Rohrzüge.**

(30) Priorität: 27.02.85 DE 3506990

(43) Veröffentlichungstag der Anmeldung:
24.09.86 Patentblatt 86/39

(45) Bekanntmachung des Hinweises auf die Patenterteilung:
10.01.90 Patentblatt 90/2

(84) Benannte Vertragsstaaten:
BE DE FR GB IT

(56) Entgegenhaltungen:
EP-A- 0 086 110
DE-A- 2 018 274
DE-A- 3 124 374
FR-A- 2 321 754
FR-A- 2 369 912
US-A- 3 869 189

(73) Patentinhaber: RXS Schrumpftechnik-Garnituren GmbH,
Profilstrasse 4, D-5800 Hagen 1(DE)

(72) Erfinder: Meltsch, Hans-Jürgen, Ing. (grad.), Im
Wietloh 18 A, D-5840 Schwerte-Ergste(DE)

(74) Vertreter: Mehl, Ernst, Dipl.-Ing., Postfach 22 13 17,
D-8000 München 22(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Abschlußformstück aus einem Schrumpfschlauchstück für Gehäuse mit angeformten Rohrstutzen oder für Rohranlagen, insbesondere für Kabelgarnituren oder Kabelrohrzüge, wobei dessen Anschlußende auf den zu verschließenden Rohrstutzen oder das Ende der Rohranlage aufschrumpfbar ist und das Abschlußende bei Bedarf geöffnet werden kann.

Aus der DE-OS 3 124 374 ist eine Kabelmuffe aus einem Metallgehäuse bekannt, das mit einer Umhüllung aus schrumpfbarem Material überzogen ist. Für die Kabeleingänge sind Rohrstutzen vorgesehen, wobei schrumpfbare Umhüllungen auf die eingeführten Kabel niedergeschrumpft werden. Da jedoch nicht immer alle Kabeleingänge belegt werden, sind sie zunächst durch geschlossene Kappen aus schrumpfbarem Material abgeschlossen. Bei Bedarf werden schließlich die Enden der Kappen abgeschnitten und die Einführung der Kabel sowie die Schrumpfung können durchgeführt werden. Durch das Beschneiden der Kappen treten jedoch beim anschließenden Schrumpfen erhebliche Schwierigkeiten an den Schnittkanten auf, da die angeschnittene Kante zum Einreißen neigt.

Weiterhin ist aus der FR-A 2 369 912 ein Abschlußformstück bekannt, das aus schrumpfbarem Material besteht und ein Abschlußende aufweist, das bei Bedarf geöffnet werden kann. Dieses Abschlußende ist jedoch nicht wärmestabil, so daß die Gefahr auftritt, daß beim Aufschrumpfen des Anschlußendes eine Verformung auftritt, so daß ein sicherer Abschluß nicht mehr gewährleistet werden kann.

Aus der EP-A 0 086 110 ist ein wärmeschrumpfbarer Artikel bekannt, in dem Einlagen angeordnet sind mit denen die Verbindung von elektrischen Leitern vorgenommen wird. An einem Ende des rohrförmigen Artikels ist ein Abschlußstück aus selbstdichtendem Material angeordnet, während das zweite Ende einen Ring aus Schmelzkleber enthält, der die Abdichtung beim Schrumpfen zum eingeführten Leiter herstellt.

So stellt sich für vorliegende Erfindung die Aufgabe, ein Abschlußformstück aus schrumpfbarem Material zu schaffen, das an einem Ende geschlossen und zunächst bei der Montage am Anschlußende formstabil ist und daß dieses bei Bedarf ohne Verletzungsgefahr an den Schrumpfkanten geöffnet werden kann, wobei das Abschlußformstück als Ganzes vorgefertigt und mit möglichst geringem Arbeitsaufwand montierbar ist. Die gestellte Aufgabe wird nun mit einem Abschlußformstück der eingangs erläuterten Art dadurch gelöst, daß das Abschlußende des Schrumpfschlauchstückes auf ein Abschlußteil aufgeschrumpft ist, daß das Abschlußteil aus einem Stützelement und einer damit integrierten Abschlußwandung besteht und im Inneren des Schrumpfschlauchstückes angeordnet ist und daß die Abschlußwandung bei Bedarf zumindest teilweise ohne Verletzung des Schrumpfschlauchstückes entfernbar ist.

Weiterhin besteht die Aufgabe, ein Verfahren zu finden mit dem unter Verwendung des erfindungsgemäßen Abschlußformstückes ein unkomplizierter Ablauf der Einführungsarbeiten erfolgen kann. Diese Aufgabe wird nun nach dem Verfahren gemäß der Erfindung dadurch gelöst, daß zunächst die Einführungsöffnung am Abschlußende des Schrumpfschlauchstückes durch Entfernung der als Aufreißdeckel oder als abtrennbare Schrumpfkappe ausgebildeten Abschlußwandung hergestellt wird, daß der langgestreckte Gegenstand eingeführt wird, daß anschließend das Schrumpfschlauchstück im Mittelbereich beginnend zum Abschlußteil hinwärts auf den langgestreckten Gegenstand durch Wärmezufuhr aufgeschrumpft wird, und daß dadurch das im Verschlußende noch verbliebene Stützelement des Abschlußteiles ausgetrieben wird.

Vorteile gegenüber dem genannten Stand der Technik ergeben sich nun insbesondere daraus, daß bei einfachster Montage des vorgefertigten Abschlußformstückes gemäß der Erfindung die erforderliche Sicherheit bezüglich der Endkanten gegeben ist und zwar durch Öffnen eines entsprechend ausgebildeten Abschlußteiles. Dieses Abschlußteil ist als separates Formstück innerhalb des Schrumpfschlauchstückes eingesetzt und wird zunächst unabhängig von diesem geöffnet. Diese Abschlußteile sind entweder ebenfalls aus schrumpfbarem Material hergestellt und werden am Ende beschnitten oder sie sind aus nicht verformbarem Material und werden dann durch andere Maßnahmen geöffnet. Diese Abschlußteile werden dann im weiteren Verlauf der Einführungsmontage nicht mehr benötigt und können anschließend entfernt werden, wobei das Schrumpfschlauchstück in dieser Vormontage nicht mit einbezogen ist. Erst nach Einführung des langgestreckten Gegenstandes, insbesondere eines Kabels, wird mit dem Schrumpfvorgang begonnen, und zwar am Ende des bereits auf den Rohrstutzen aufgeschrumpften Schrumpfschlauchstückes. Dadurch wird das Schrumpfschlauchstück vom Rohrstutzen her bis zu seinem Ende auf den eingeführten Gegenstand niedergeschrumpft. Hierbei wird der auf der Innenwandung aufgebrachte Schmelzkleber aktiviert und das eingesetzte Abschlußteil beginnt zu "schwimmen". Durch das niederschrumpfende Schrumpfschlauchstück wird das Abschlußteil schließlich ausgetrieben, so daß es nach Beendigung des Schrumpfvorganges entfernt werden kann. Durch eine konische Ausbildung des Abschlußteiles wird dieser Austreibvorgang begünstigt.

Ein weiterer Vorteil ergibt sich für die Fertigung solcher Abschlußformstücke, da entsprechend lange Schrumpfschlauchstücke verwendet werden können. Diese einfach zu fertigenden Schrumpfschlauchstücke werden dann mit entsprechend kurzen Abschlußteilen zu den erforderlichen Abschlußformstücken ergänzt.

Anhand von 13 Figuren, in denen verschiedene Ausführungsbeispiele gemäß der Erfindung dargestellt sind, werden das Prinzip und die entsprechenden Ausbildungen näher erläutert.

Fig. 1 zeigt ein Abschlußformteil mit einem Abschlußteil, das einen Aufreißdeckel enthält.

Fig. 2 zeitgt die Stirnansicht des vorherigen Ausführungsbeispieles.

Fig. 3 zeigt das vorherige Ausführungsbeispiel, wobei bereits ein langgestreckter Gegenstand eingeführt ist.

Fig. 4 zeigt den Endzustand der Montage.

Fig. 5 zeigt ein Ausführungsbeispiel mit einem aus einer Schrumpfkappe bestehenden Abschlußteil.

Fig. 6 zeigt ein Abschlußteil aus verformbarem Material in seiner Grundform.

Fig. 7. zeigt das Abschlußteil nach Fig. 6 in seiner Montageform.

Fig. 8 zeigt eine Variante des Abschlußteiles nach Fig. 6 in seiner Montageform.

Fig. 9 zeigt ein montiertes Abschlußteil nach Fig. 7 oder 8.

Fig. 10 zeigt ein becherförmiges Abschlußteil.

Fig. 11 zeigt ein rohrförmiges Stützelement im Innern des Schrumpfschlauchstückes.

Fig. 12 zeigt ein ringförmiges Stützelement, das gleichzeitig als Anschlag für den Rohrstutzen dient.

Fig. 13 zeigt ein spiralförmiges Stützelement.

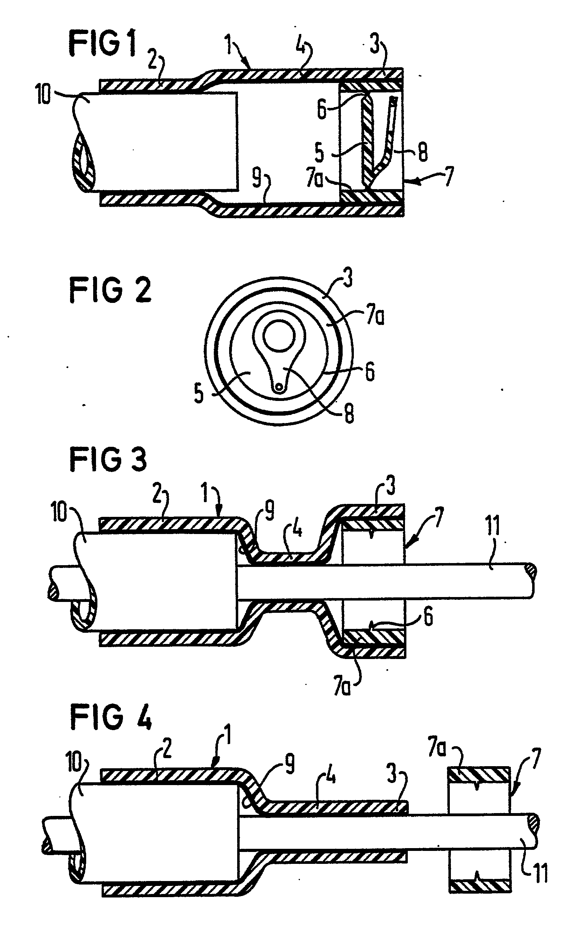

Das in Fig. 1 dargestellte Ausführungsbeispiel gemäß der Erfindung verdeutlicht im wesentlichen das Prinzip, das allen nachfolgenden Varianten zugrunde liegt. Der Rohrstutzen 10 eines Gehäuses, einer Kabelgarnitur oder einer Rohrzuganlage ist mit einem Abschlußformstück 1 gemäß der Erfindung abgeschlossen und zwar so, daß der Rohrstutzen 10 bei Bedarf zum Einführen eines langgestreckten Gegenstandes in einfacher Weise wieder zugänglich gemacht werden kann. Die Öffnung soll jedoch nach dem Einführen des Gegenstandes wieder abgedichtet werden und dies erfolgt mit Hilfe des Schrumpfschlauchstückes 2-3-4, das bereits mit seinem Anschlußende 2 auf dem Ende des Rohrstutzens 10 fest aufgeschrumpft ist. Das Verschlußende 3 des Schrumpfschlauchstückes 2-3-4 ist als vergefertigtes Teil mit einem Abschlußteil 7 versehen. Das Abschlußteil 7 beinhaltet ein rohrförmiges Stützelement 7a und einen senkrecht zu Achsrichtung als Abschlußwandung ausgebildeten Aufreißdeckel 5. Dieser Aufreißdeckel 5 ist über eine umlaufende Schwachstelle entlang einer Reißlinie 6 im Stützelement 7a eingesetzt und kann durch Zug- oder Druckbeanspruchung ausgerissen bzw. eingedrückt werden. Zu diesem Zweck ist dieser Aufreißdeckel 5 mit einer Reißlasche 8 versehen, mit deren Hilfe der vorgang erleichtert wird. Weiterhin ist die innere Oberfläche des Schrumpfschlauchstückes 2-3-4 mit einem Schmelzkleber 9 versehen, der zur Abdichtung und Festigung des später eingeführten Gegenstandes dient. Die Darstellung dieser Fig. 1 entspricht dem unbelegten Zustand, d.h. der Rohrstutzen 10 wird zu diesem Zeitpunkt nicht benötigt und ist mit dem Abschlußformstück 1 feuchtigkeitsdicht abgeschlossen. Die Permeationsdichte kann weiter verbessert werden, wenn die Abschlußwandung des Abschlußteils mit permeationsdichtem Material, z.B. Aluminium, beschichtet ist.

Die Fig. 2 zeigt das Abschlußformstück 1 in einer Stirnansicht vom verschlossenen Ende her. Hieraus wird in erster Linie der Aufreißdeckel 5 deutlich, der über die Reißlinie 6 im Stützelement 7a des Abschlußteiles 7 eingesetzt ist. Die Reißlasche 8 dient zum Entfernen der als Aufreißdeckel 5 ausgebildeten Abschlußwandung.

Die Fig. 3 zeigt das Abschlußformstück 1 nach Fig. 1 während des Schrumpfvorganges, nachdem bereits ein langgestreckter Gegenstand 11 in das geöffnete Abschlußteil 7 eingeführt worden ist. Das Schrumpfschlauchstück 2-3-4 ist in seinem Mittelbereich 4 bereits auf die Oberfläche des eingeführten Gegenstandes 11 dichtend niedergeschrumpft, d.h. durch die Wärmezufuhr wurde der Schmelzkleber 9 auf der Innenwandung des Schrumpfschlauchstückes 2-3-4 aktiviert. Die Aktivierung des Schmelzklebers 9 führt nun im Bereich des Verschlußendes 3 dazu, daß das Stützelement 7a des restlichen Abschlußteiles 7 vom Schrumpfschlauchstück 2-3-4 gelöst wird und zu "schwimmen" beginnt. Durch das weitere Niederschrumpfen des Schrumpfschlauchstückes 2-3-4 in Richtung zum Abschlußende 3 wird das restliche, nun bereits gelöste Abschlußteil 7 ausgetrieben, wie es schließlich die Fig. 4 verdeutlicht. Hier ist das Schrumpfschlauchstück 2-3-4 vollends auf den eingeführten Gegenstand 11 dichtend aufgeschrumpft, wobei nun das Abschlußteil 7 freiliegt und entfernt werden kann. Alle Montagevorkehrungen wurden bisher nur am eingesetzten Abschlußteil 5 vorgenommen, so daß die Abschlußkanten des Schrumpfschlauchstückes 2-3-4 in keiner Weise beeinflußt wurden. Ein Einreißen dieser Abschlußkanten ist somit vermieden und die Dichtungsfunktion ist im vollen Bereich gegeben. Außerdem ist durch das vorgefertigte und für alle Montagephasen vorbereitete Abschlußformstück 1 eine einfache und sichere Montage möglich, wobei als "Werkzeug" nur die für das Schrumpfen benötigte Wärme bereitzustellen ist. Weiterhin wird festgestellt, daß mit diesem unproblematischen Abschlußformstück 1 alle Erfordernisse bezüglich der Dichtigkeit und der mechanischen Festigkeit erfüllt werden können.

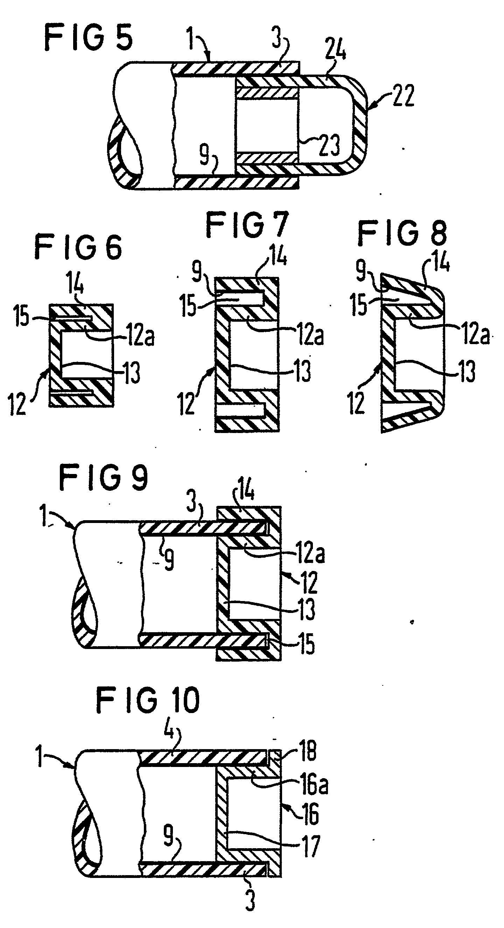

Das Abschlußstück 1 nach Figur 5 ist besonders einfach und unproblematisch, da als Abschlußteil 22 eine abtrennbare Schrumpfkappe 24 verwendet wird. Diese Schrumpfkappe 24 ist am offenen Ende ein ringförmiges Stützelement 23 aufgeschrumpft. Dadurch ist auch für das darüberliegende Verschlußende 3 des Schrumpfschlauchstückes 2-3-4 eine Stützung gegeben, auf die es über eine Schmelzklebeschicht 9 hinweg zunächst für den Verschlußfall dichtend aufgeschrumpft ist. Bei Bedarf wird nun das Abschlußteil 22 am Kappenende abgeschnitten, so daß der langgestreckte Gegenstand eingeführt werden kann. Die weiteren Verfahrensschritte gleichen den bereits beschriebenen und zum Schluß wird das beschnittene restliche Abschlußteil 22 ausgetrieben. In diesem Fall kann bei Verwendung geeigneten Materials und bei entsprechender Stärke auf ein zusätzliches Stützelement verzichtet werden, d.h. die Schrumpfkappe 24 bildet für sich alleine das Abschlußteil 22 und übernimmt somit auch die Stützfunktion. Bei der Erstellung des Abschlußstückes 1 ist es dann zweckmäßig die Aufschrumpfung des Schrumpfschlauchstückes 2-3-4 auf einem in die Schrumpfkappe 24 eingeschobenen Dorn vorzunehmen, der anschließend wieder entfernt wird.

In den folgenden Figuren 6,7,8 und 9 wird ein Abschlußteil 12 mit Varianten beschrieben, welche becherförmig ausgebildet sind und auf das Abschlußende 3 des Schrumpfschlauchstückes 2-3-4 aufgeschoben und schließlich aufgeschrumpft werden. Im Prinzip besitzt quasi jedes dieser Abschlußteile 12 ein ringförmiges Stützelement 12a, an welchem am inneren Ende die Abschlußwandung 13 anschließt und das am äußeren Ende in einen umgebördelten Ring 14 übergeht. Auf diese Weise entsteht eine ringförmige Nut 13, in welche das Abschlußende 3 des Schrumpfschlauchstückes 2-3-4 eingeführt und abgedichtet wird. Fig. 9 zeigt diesen Endzustand. Die Fig. 6 hingegen zeigt zunächst das Ausgangsprodukt für ein derartiges Abschlußteil 12, das aus vernetzbarem Kunststoff, z.B. aus Long-Density-Polyethylen (LDPE), als Spritzteil hergestellt wird. Nach dem Vernetzen wird der umgebördelte Ring 14 durch einen Weitungsprozeß gedehnt, so daß die umlaufende Nut erweitert wird, wie in Fig. 7 dargestellt ist. Auf diese Weise läßt sich das Schrumpfschlauchstück 2-3-4 leicht einführen. Bei anschließender Wärmezufuhr bildet sich der Ring 14 zurück und umschließt dichtend das Schrumpfschlauchstück 2-3-4 am Abschlußende 3 (Fig. 9). Eine Einlage aus Schmelzkleber 9 begünstigt die Abdichtung und das spätere Entfernen des restlichen Abschlußteils 12.

Die Fig. 8 zeigt eine Variante bei der Dehnung des umgebördelten Ringes 14, der in diesem Fall konusförmig erweitert ist und somit das Einführen des Schrumpfschlauchstückes 2-3-4 erleichtert. Das Einbringen der Einführungsöffnung wird durch Einschneiden. Ausreißen nach dem bereits beschriebenen Aufreißprinzip oder ähnlichen Maßnahmen vorgenommen, wobei in keinem dieser Fälle das für die Abdichtung erforderliche Schrumpfschlauchstück 2-3-4 bearbeitet wird.

Die Fig. 10 veranschaulicht ein becherförmiges Abschlußteil 16, das wiederum am Abschlußende 3 des Schrumpfschlauchstückes 2-3-4 dichtend eingesetzt ist. Das zylinderförmige Teil dient dabei als Stützelement 16a, wobei am äußeren Ende ein ringförmiger Anschlag 18 einen sicheren Sitz vermittelt. Die Abschlußwandung 17 kann beschriebenen anderen Art ausgebildet werden. Dieses Abschlußteil 16 kann nun auch aus nicht verformbarem Material bestehen, wenn die erforderliche Dichtung durch geringes Anschrumpfen des Schrumpfschlauchstückes 2-3-4 über den Schmelzkleber 9 erfolgt. Andererseits ist es auch möglich, das Abschlußteil 16 aus einem Material mit Formgedächtnis auszubilden, wobei dann die Abdichtung durch Aufweitung des Abschlußteils 16 innerhalb des Schrumpfschlauchstückes 2-3-4 bewerkstelligt wird.

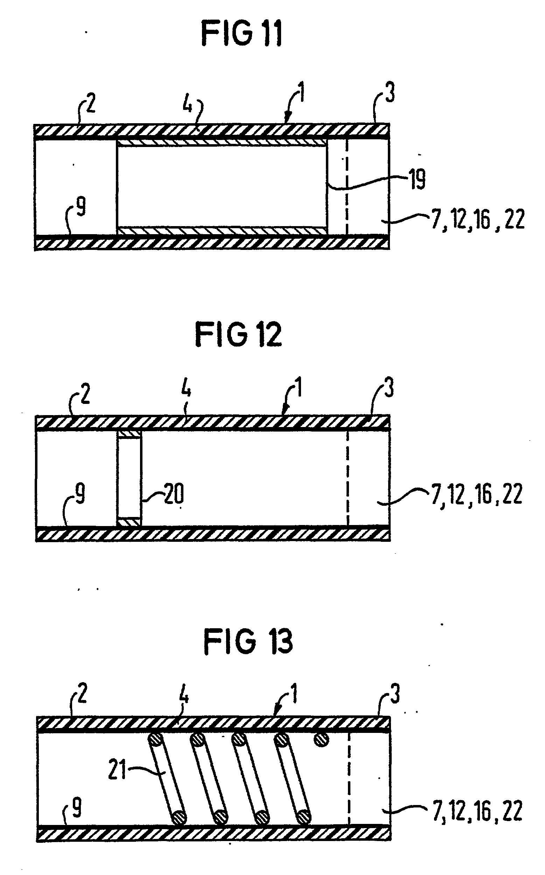

In den folgenden Figuren 11, 12 und 13 wird veranschaulicht, wie die Abschlußformstücke 1 gemäß der Erfindung weiter konfektioniert werden können. Hierbei ist von Vorteil, daß die Schrumpfschlauchstücke 2-3-4 in ihren Mittelbereichen 4 durch weitere Stützelemente 19, 20 oder 21 gefertigt werden können. Die eingelagerten Stützelemente 19, 20 bzw. 21 sind so eingelagert, daß sie für das Aufschrumpfen des Anschlußendes 2 jeweils einen Anschlag bilden, so daß der richtige Sitz gewährleistet wird. Für solche Stützelemente eignen sich z.B. Rohre 19 (Fig. 11), Ringe 20 (Fig. 12) oder Spiralen 21 (Fig. 13) aus den verschiedensten Materialien, z.B. auch aus Verbundmaterialien. Die beiden erstgenannten Stützelemente sind vorzugsweise mit einer Silikonbeschichtung versehen, damit sie bei Belegung des Rohrstutzens leicht entfernt werden können. Das ringförmige Stützelement 20 hat den Vorteil, daß es u.U. auch im Inneren belassen werden kann. Das ringförmige Stützelement 20 kann beispielsweise auch als Federring eingesetzt werden, der je nach Erfordernis in der entsprechenden Tiefe fixiert wird. Durch die Wahl der inneren Öffnung kann er auch als Anschlag Verwendung finden. Um jedoch auch für kleinere Rohrdurchmesser einen Anschlag gewährleisten zu können, ist beispielsweise ein reißfähiges Querbändchen vorgesehen, das zunächst beim Aufsetzen als Anschlag dient. Beim Einführen des langgestreckten Gegenstandes wird es jedoch zerstört, so daß dieser voll eingeführt werden kann.

Die spiralförmigen Stützelemente 21 nach Fig. 13 sind vorzugsweise so ausgebildet bzw. eingesetzt, daß sie durch Zug austrennbar sind. Das spiralförmig eingesetzte Stützelement kann beispielsweise auch aus einem rohrförmigem Gebilde bestehen, welches spiralförmige Vorprägungen aufweist, durch die bei Zug ein spiralförmiges Austrennen erfolgen kann. Als weitere Variante kann eine Spirale aus Schmelzkleber vorgesehen werden, bei der die Stützwirkung während des Schrumpfvorganges zusammenbricht. Auf diese Weise braucht das Stützelement nicht mehr entfernt werden. Dadurch läßt sich die Montage zusätzlich verbessern und erleichtern. In diesem Sinne können auch Stützgewebe eingesetzt werden, deren Form bzw. Stützwirkung bei Wärmeeinwirkung verlorengeht. Durch die radial nach innen wirkenden Schrumpfkräfte wird das Gewebe, z.B. ein Diagonalgewebe, zusammengedrückt und das Schrumpfschlauchstück 2-3-4 kann niedergeschrumpft werden.

Bei all den Ausführungsbeispielen nach den Figuren 11, 12 und 13 ist ergänzend angedeutet, daß die Abschlußteile 7, 12, 16 oder 22 je nach Erfordernis eingesetzt sind.

Bei Verwendung solcher Abschlußformteile 1 gemäß der Erfindung läßt sich jeweils im Sinne der Erfindung mit Hilfe eines entsprechenden Verfahrens ein Abschluß für Rohrstutzen an Gehäusen oder Rohranlagen, insbesondere bei Kabelgarnituren oder Kabelrohrzügen, herstellen, wobei zunächst ohne Bearbeitung des später für die Dichtung benötigten Schrumpfschlauchstückes eine einfache Einführungsöffnung in einem eingesetzten, später nicht mehr benötigten Abschlußteil erfolgt. Anschließend erfolgt die Einführung und Fixierung des langgestreckten Gegenstandes. Schließlich wird durch Schrumpfung, die vom Rohrstutzen beginnend in Richtung Abschlußende vorangetrieben wird, die Abdichtung mit dem eingeführten Gegenstand hergestellt. Dabei wird gleichzeitig das restliche Abschlußteil nach außen gedrückt und kann entfernt werden.

**Patentansprüche**

1. Abschlußformstück (1) aus einem Schrumpfschlauchstück (2-3-4) für Gehäuse mit angeformten Rohrstutzen oder für Rohranlagen (10), insbesondere für Kabelgarnituren oder Kabelrohrzüge, wobei dessen Anschlußende (2) auf den zu verschließenden Rohrstutzen oder das Ende der Rohranlage (10) aufschrumpfbar ist und das Abschlußende (3) bei Bedarf geöffnet werden kann, dadurch gekennzeichnet, daß das Abschlußende (3) des Schrumpfschlauchstückes (2-3-4) auf ein Abschlußteil (7, 12, 16, 22) aufgeschrumpft ist, daß das Abschlußteil (7, 12, 16, 22) aus einem Stützelement (7a, 12a, 16a, 19, 20, 21, 23, 24) und einer damit integrierten Abschlußwandung (5, 13, 17, 24) besteht und im Inneren des Schrumpfschlauchstückes (2-3-4) angeordnet ist und daß die Abschlußwandung (5, 13, 17, 24) bei Bedarf zumindest teilweise ohne Verletzung des Schrumpfschlauchstückes (2-3-4) entfernbar ist.

2. Abschlußformstück nach Anspruch 1, dadurch gekennzeichnet, daß die Abschlußwandung des Abschlußteiles (7, 12, 16) als Aufreißdeckel (5, 13, 17) ausgebildet ist.

3. Abschlußformstück nach Anspruch 2, dadurch gekennzeichnet, daß der als Abschlußwandung ausgebildete Aufreißdeckel (5, 13, 17) entlang der Reißlinie (6) eine Materialschwächung aufweist.

4. Abschlußformstück nach Anspruch 2 oder 3, dadurch gekennzeichnet, daß der Aufreißdeckel (5, 13, 17) eine Reißlasche (8) aufweist.

5. Abschlußformstück nach Anspruch 1, dadurch gekennzeichnet, daß die Abschlußwandung des Abschlußteiles (22) als abschneidbare Schrumpfkappe (24) ausgebildet ist.

6. Abschlußformstück nach Anspruch 5, dadurch gekennzeichnet, daß die Wandstärke der Schrumpfkappe (24) so stark ausgebildet ist, daß sie zumindest im Bereich des Verschlußendes (3) als Stützelement dient.

7. Abschlußformstück nach Anspruch 5, dadurch gekennzeichnet, daß die Schrumpfkappe (24) auf einem ringförmigen Stützelement (23) aufgeschrumpft ist.

8. Abschlußformstück nach einem der vorhergehenden Ansprüche, dadurch gekennzeichnet, daß ein Stützelement (19, 20, 21) im Mittelbereich (4) des Schrumpfschlauchstückes (2-3-4) vorzugsweise entfernbar angeordnet ist.

9. Abschlußformstück nach Anspruch 8, dadurch gekennzeichnet, daß das Stützelement als Rohr (19) ausgebildet ist.

10. Abschlußformstück nach Anspruch 8, dadurch gekennzeichnet, daß das Stützelement als Ring (20) ausgebildet ist.

11. Abschlußformstück nach Anspruch 9 oder 10, dadurch gekennzeichnet, daß die äußere Oberfläche des Stützelementes (19, 20) eine Silikonbeschichtung aufweist.

12. Abschlußformstück nach Anspruch 8, dadurch gekennzeichnet, daß das Stützelement als Spirale (21) ausgebildet ist.

13. Abschlußformstück nach Anspruch 12, dadurch gekennzeichnet, daß die Spirale (21) durch Zug austrennbar ist.

14. Abschlußformstück nach Anspruch 12, dadurch gekennzeichnet, daß die Spirale (21) aus Schmelzkleber besteht.

15. Abschlußformstück nach Anspruch 12, dadurch gekennzeichnet, daß die Spirale durch spiralförmigen Einschnitt in einem rohrförmigen Stützelement gebildet ist.

16. Abschlußformstück nach einem der vorhergehenden Ansprüche, dadurch gekennzeichnet, daß das Schrumpfschlauchstück (2-3-4) aus vernetztem, schrumpfbarem Kunststoff, insbesondere aus Long-Density-Polyethylen (LDPE) besteht.

17. Abschlußformstück nach einem der Ansprüche 1 bis 11 oder 16, dadurch gekennzeichnet, daß das Stützelement (7a, 12a, 16a, 19, 20, 23) als vorzugsweise verformbares Stützgewebe ausgebildet ist.

18. Abschlußformstück nach einem der Ansprüche 1 bis 8, dadurch gekennzeichnet, daß das Stützelement als Federring ausgebildet ist.

19. Abschlußformstück nach einem der vorhergehenden Ansprüche, dadurch gekennzeichnet, daß ein Querbändchen als Anschlag im Stützelement angeordnet ist.

20. Abschlußformstück nach einem der vorhergehenden Ansprüche, dadurch gekennzeichnet, daß das Schrumpfschlauchstück (2-3-4) zylindrisch ausgebildet ist.

21. Abschlußformstück nach einem der Ansprüche 1 bis 19, dadurch gekennzeichnet, daß das Schrumpfschlauchstück (2-3-4) konisch ausgebildet ist.

22. Abschlußformstück nach einem der vorhergehenden Ansprüche, dadurch gekennzeichnet, daß das Stützelement (7a, 12a, 16a) mit Abreißdeckel (5, 13, 17) becherförmig ausgebildet ist, wobei die Abschlußwandung am Verschlußende (3) nach einwärts gerichtet angeordnet ist.

23. Abschlußformstück nach Anspruch 22, dadurch gekennzeichnet, daß das Stützelement (16a) einen ringförmigen Anschlag (18) aufweist.

24. Abschlußformstück nach Anspruch 22, dadurch gekennzeichnet, daß das Stützelement (12a) am äußeren Ende einen umgebördelten Ring (14) aufweist, so daß eine ringförmige Nut (15) gebildet ist.

25. Abschlußformstück nach Anspruch 24, dadurch gekennzeichnet, daß zumindest der umgebördelte Ring (14) aus einem Material mit Formgedächtnis besteht.

26. Abschlußformstück nach einem der Ansprüche 22 bis 26, dadurch gekennzeichnet, daß nur der Abreißdeckel (5, 13, 17) entfernbar ist.

27. Abschlußformstück nach einem der Ansprüche 22 bis 25, dadurch gekennzeichnet, daß das Stützelement (7a, 12a, 16a) mit Abreißdeckel (5, 13, 17) als Ganzes entfernbar ist.

28. Abschlußformstück nach einem der vorhergehenden Ansprüche, dadurch gekennzeichnet, daß die äußere Umfangsfläche des Abschlußteils (7, 12, 16, 22) konisch ausgebildet ist.

29. Verfahren zum Herstellen der dichten Einführung eines langgestreckten Gegenstandes (11), vorzugsweise von Kabeln, mit Hilfe eines auf den Rohrstutzen oder auf das Ende einer Rohranlage (10) aufgeschrumpften Abschlußformstückes (1) nach einem der vorhergehenden Ansprüche, dadurch gekennzeichnet, daß zunächst die Einführungsöffnung am Abschlußende (3) des Schrumpfschlauchstückes (2-3-4) durch Entfernung der als Aufreißdeckel (5, 13, 17) oder als abtrennbare Schrumpfkappe (24) ausgebildeten Abschlußwandung hergestellt wird, daß der langgestreckte Gegenstand (11) eingeführt wird, daß anschließend das Schrumpfschlauchstück (2-3-4) im Mittelbereich (4) beginnend zum Abschlußteil (7, 12, 16, 22) hinwärts auf den langgestreckten Gegenstand (11) durch Wärmezufuhr aufgeschrumpft wird, und daß dadurch das im Verschlußende (3) noch verbliebene Stützelement (7a, 12a, 16a, 23, 24) des Abschlußteiles (7, 12, 16, 22) ausgetrieben wird.

## Claims

1. Terminal cover piece (1) consisting of a heat-shrinkable sleeve (2-3-4) for housings with moulded-on pipe connection pieces or for pipe systems (10), in particular for cable assemblies or lengths of cable piping, the connecting end (2) of the cover piece being such that it can be shrunk onto the pipe connection piece to be closed or the end of the pipe system (10) and the terminating end (3) being such that it can be opened as required, characterized in that the terminating end (3) of the heat-shrinkable sleeve (2-3-4) is shrunk onto a terminating component (7, 12, 16, 22), in that the terminating component (7, 12, 16, 22) consists of a support element (7a, 12a, 16a, 19, 20, 21, 23, 24) and a terminating wall (5, 13, 17, 24) integrated with it and is arranged inside the heat-shrinkable sleeve (2-3-4) and in that the terminating wall (5, 13, 17, 24) can be removed as required, at least partially, without damaging the heat-shrinkable sleeve (2-3-4).

2. Terminal cover piece according to Claim 1, characterized in that the terminating wall of the terminating component (7, 12, 16) is in the form of a pull-tab lid (5, 13, 17).

3. Terminal cover piece according to Claim 2, characterized in that the pull-tab lid (5, 13, 17) in the form of a terminating wall has a material weakness along the tear line (6).

4. Terminal cover piece according to Claim 2 or 3, characterized in that the pull-tab lid (5, 13, 17) has a pull tab (8).

5. Terminal cover piece according to Claim 1, characterized in that the terminating wall of the terminating component (22) is in the form of a heat-shrinkable cap (24) which can be cut off.

6. Terminal cover piece according to Claim 5, characterized in that the wall of the heat-shrinkable cap (24) is so strong in construction that it has the function of a support element, at least in the region of the closure end (3).

7. Terminal cover piece according to Claim 5, characterized in that the heat-shrinkable cap (24) is shrunk on an annular support element (23).

8. Terminal cover piece according to one of the preceding claims, characterized in that a support element (19, 20, 21) is arranged in the central region (4) of the heat-shrinkable sleeve (2-3-4), preferably in a removable fashion.

9. Terminal cover piece according to Claim 8, characterized in that the support element is in the form of a tube (19).

10. Terminal cover piece according to Claim 8, characterized in that the support element is in the form of a ring (20).

11. Terminal cover piece according to Claim 9 or 10, characterized in that the outer surface of the support element (19, 20) has a silicone coating.

12. Terminal cover piece according to Claim 8, characterized in that the support element is in the form of a coil (21).

13. Terminal cover piece according to Claim 12, characterized in that the coil (21) can be removed by pulling.

14. Terminal cover piece according to Claim 12, characterized in that the coil (21) consists of hotmelt adhesive.

15. Terminal cover piece according to Claim 12, characterized in that the coil is formed by means of a spiral-shaped incision in a tubular support element.

16. Terminal cover piece according to one of the preceding claims, characterized in that the heat-shrinkable sleeve (2-3-4) consists of cross-linked, heat-shrinkable plastic, in particular of long-density (sic) polyethylene (LDPE).

17. Terminal cover piece according to one of Claims 1 to 11 or 16, characterized in that the support element (7a, 12a, 16a, 19, 20, 23) is in the form of a preferably deformable support fabric.

18. Terminal cover piece according to one of Claims 1 to 8, characterized in that the support element is in the form of a spring washer.

19. Terminal cover piece according to one of the preceding claims, characterized in that a small crossbelt is arranged as a stop in the support element.

20. Terminal cover piece according to one of the preceding claims, characterized in that the heat-shrinkable sleeve (2-3-4) is of cylindrical construction.

21. Terminal cover piece according to one of Claims 1 to 19, characterized in that the heat-shrinkable sleeve (2-3-4) is of conical construction.

22. Terminal cover piece according to one of the preceding claims, characterized in that the support element (7a, 12a, 16a) with pull-tab lid (5, 13, 17) is of cup-shaped construction, the terminating wall at the closure end (3) being arranged directed inwards.

23. Terminal cover piece according to Claim 22, characterized in that the support element (16a) has an annular stop (18).

24. Terminal cover piece according to Claim 22, characterized in that the support element (12a) has a flanged ring (14) at the outer end, so that an annular groove (15) is formed.

25. Terminal cover piece according to Claim 24, characterized in that at least the flanged ring (14) consists of a material with memory.

26. Terminal cover piece according to one of Claims 22 to 26, characterized in that only the pull-tab lid (5, 13, 17) can be removed.

27. Terminal cover piece according to one of Claims 22 to 25, characterized in that the support element (7a, 12a, 16a) with pull-tab lid (5, 13, 17) can be removed as a whole.

28. Terminal cover piece according to one of the preceding claims, characterized in that the outer circumferential surface of the terminating component (7, 12, 16, 22) is of conical construction.

29. Method of producing the tight introduction of an elongated object (11), preferably of cables, with the aid of a terminal cover piece (1) shrunk onto the pipe connection piece or onto the end of a pipe system (10) according to one of the preceding claims, characterized in that, initially, the introduction opening at the terminating end (3) of the heat-shrinkable sleeve (2-3-4) is produced by removing the terminating wall in the form of a pull-tab lid (5, 13, 17) or of a separable heat-shrinkable cap (24), in that the elongated object (11) is introduced, in that the heat-shrinkable sleeve (2-3-4) is then shrunk onto the elongated object (11), starting in the central region (4) towards the terminating component (7, 12, 16, 22), by the application of heat, and in that, as a result of this, the support element (7a, 12a, 16a, 23, 24) of the terminating component (7, 12, 16, 22) still remaining in the closure end (3) is driven out.

## Revendications

1. Pièce de fermeture moulée (1) formée par un élément de manchon thermorétractable (2-3-4) pour un boîtier comportant un embout tubulaire formé par façonnage sur le boîtier, ou pour des installations de conduits tubulaires (10), notamment pour des accessoires de câbles ou des conduits pour câbles, l'extrémité de raccordement (2) de la pièce de fermeture moulée pouvant être emmanchée à chaud sur l'embout tubulaire devant être obturé sur l'extrémité de l'installation de tubes (10), tandis que l'extrémité de fermeture (3) peut être ouverte le cas échéant, caractérisée par le fait que l'extrémité de fermeture (3) de l'élément de manchon thermorétractable (2-3-4) est emmanchée à chaud sur un élément de fermeture (7, 12, 16, 22), que l'élément de fermeture (7, 12, 16, 22) est constitué par un élément de support (7a, 12a, 16a, 19, 20, 21, 23, 24) et par une paroi de fermeture (5, 13, 17, 24) intégrée à cet élément de support et est disposé à l'intérieur de l'élément de manchon thermorétractable (2-3-4), et que la paroi de fermeture (5, 13, 17, 24) peut être le cas échéant retirée au moins partiellement, sans aucune altération de l'élément de manchon thermorétractable (2-3-4).

2. Pièce de fermeture moulée suivant la revendication 1, caractérisée par le fait que la paroi de fermeture de l'élément de fermeture (7, 12, 16) est réalisée sous la forme d'un couvercle arrachable (5, 13, 17).

3. Pièce de fermeture moulée suivant la revendication 2, caractérisée par le fait que le couvercle arrachable (5, 13, 17) constituant la paroi tubulaire comporte une zone d'affaiblissement du matériau le long de la ligne d'arrachement (6).

4. Pièce de fermeture moulée suivant la revendication 2 ou 3, caractérisée par le fait que le couvercle arrachable (5, 13, 17) comporte une languette d'arrachement (8).

5. Pièce de fermeture moulée suivant la revendication 1, caractérisée par le fait que la paroi de fermeture de l'élément de fermeture (22) est réalisée sous la forme d'un capot thermorétractable (24) pouvant être coupé.

6. Pièce de fermeture moulée suivant la revendication 5, caractérisée par le fait que la paroi du capot thermorétractable (24) est suffisamment épaisse pour qu'elle serve au moins d'élément de protection, dans la zone de l'extrémité de fermeture (3).

7. Pièce de fermeture moulée suivant la revendication 5, caractérisée par le fait que le capot thermorétractable (24) est emmanché à chaud sur un élément de support annulaire (23).

8. Pièce de fermeture moulée suivant l'une des revendications précédentes, caractérisée par le fait qu'un élément de support (19, 20, 21) est prévu, de préférence de manière à être amovible, dans la zone médiane (4) de l'élément de manchon thermorétractable (2-3-4).

9. Pièce de fermeture moulée suivant la revendication 8, caractérisée par le fait que l'élément de support est réalisé sous la forme d'un tube (19).

10. Pièce de fermeture moulée suivant la revendication 8, caractérisée par le fait que l'élément de support est réalisé sous la forme d'un anneau (20).

11. Pièce de fermeture moulée suivant la revendication 9 ou 10, caractérisée par le fait que la surface extérieure de l'élément de support (19, 20) comporte un revêtement en silicone.

12. Pièce de fermeture moulée suivant la revendication 8, caractérisée par le fait que l'élément de support est réalisé sous la forme d'une hélice (21).

13. Pièce de fermeture moulée suivant la revendication 12, caractérisée par le fait que l'hélice (21) peut être retirée par traction.

14. Pièce de fermeture moulée suivant la revendication 12, caractérisée par le fait que l'hélice (21) est formée par une colle fusible.

15. Pièce de fermeture moulée suivant la revendication 12, caractérisée par le fait que l'hélice est formée au moyen d'un découpage hélicoïdal dans un élément de support de forme tubulaire.

16. Pièce de fermeture moulée suivant l'une des revendications précédentes, caractérisée par le fait que l'élément de manchon thermorétractable (2-3-4) est constitué par une matière plastique réticulée thermorétractable, notamment du polyéthylène basse densité (LDPE).

17. Pièce de fermeture moulée suivant l'une des revendications 1 à 11 ou 16, caractérisée par le fait que l'élément de support (7a, 12a, 16a, 19, 20, 23) est réalisé sous la forme d'un tissu de support de préférence déformable.

18. Pièce de fermeture moulée suivant l'une des revendications 1 à 8, caractérisée par le fait que l'élément de support est réalisé sous la forme d'une bague élastique.

19. Pièce de fermeture moulée suivant l'une des revendications précédentes, caractérisée par le fait qu'une bandelette transversale est disposée en tant que butée dans l'élément de support.

20. Pièce de fermeture moulée suivant l'une des revendications précédentes, caractérisée par le fait que l'élément de manchon thermorétractable (2-3-4) est agencé avec une forme cylindrique.

21. Pièce de fermeture moulée suivant l'une des revendications 1 à 19, caractérisée par le fait que l'élément de manchon thermorétractable (2-3-4) possède une forme conique.

22. Pièce de fermeture moulée suivant l'une des revendications précédentes, caractérisée par le fait que l'élément de support (7a, 12a, 16a) muni du couvercle arrachable (5, 13, 17) est réalisé sous la forme d'un pot, la paroi de fermeture située sur l'extrémité de fermeture (3) étant disposée de manière à être dirigée vers l'intérieur.

23. Pièce de fermeture moulée suivant la revendication 22, caractérisée par le fait que l'élément de support (16a) comporte une butée annulaire (18).

24. Pièce de fermeture moulée suivant la revendication 22, caractérisée par le fait que l'élément de support (12a) possède, sur son extrémité extérieure, un anneau rabattu (14), qui forme une gorge annulaire (15).

25. Pièce de fermeture moulée suivant la revendication 24, caractérisée par le fait qu'au moins l'anneau rabattu (14) est réalisé en un matériau possédant une mémoire de forme.

26. Pièce de fermeture moulée suivant l'une des revendications 22 à 26, caractérisée par le fait que seul le couvercle arrachable (5, 13, 17) peut être retiré.

27. Pièce de fermeture moulée suivant l'une des revendications 22 à 25, caractérisée par le fait que l'élément de support (7a, 12a, 16a) muni du couvercle arrachable (5, 13, 17) peut être retiré sous la forme d'une seule unité.

28. Pièce de fermeture moulée suivant l'une des revendications précédentes, caractérisée par le fait que la surface périphérique extérieure de l'élément de raccordement (7, 12, 16, 22) est réalisée avec une forme conique.

29. Procédé pour fabriquer l'élément d'entrée étanche d'un objet allongé (11), de préférence de câbles, à l'aide d'une pièce de fermeture moulée (1) emmanchée à chaud sur l'embout tubulaire ou sur l'extrémité d'une installation de conduits tubulaires (10), selon l'une quelconque des revendications précédentes, caractérisé en ce qu'on fabrique tout d'abord l'ouverture d'entrée au niveau de l'extrémité de fermeture (3) de l'élément de manchon thermorétractable (2-3-4), par enlèvement de la paroi de fermeture réalisée sous la forme du couvercle arrachable (5, 13, 17) ou du capot themorétractable amovible (24), qu'on introduit l'objet allongé (11), qu'on emmanche ensuite à chaud, par apport de chaleur, l'élément de manchon thermorétractable (2-3-4) sur l'objet allongé (11), en commençant dans la zone médiane (4) en direction de l'élément de raccordement (7, 12, 16, 22), et que de ce fait l'élément de support (7a, 12a, 16a, 23, 24), de l'élément de fermeture (7, 12, 16, 22), qui subsiste encore dans l'extrémité de fermeture (3), est éjecté.

FIG 1

FIG 2

FIG 3

FIG 4

FIG 5

FIG 6

FIG 7

FIG 8

FIG 9

FIG 10

# FIG 11

# FIG 12

# FIG 13